# EUROPÄISCHE PATENTSCHRIFT

(11) **EP 3 117 122 B1**
(45) Veröffentlichungstag und Bekanntmachung des Hinweises auf die Patenterteilung: **10.04.2019**
(21) Anmeldenummer: 15713126.9
(22) Anmeldetag: 12.02.2015
(51) Int. Cl.: F16G 5/20

(54) **KEILRIPPENRIEMEN UND VERFAHREN ZUR ANZEIGE EINES VERSCHLEISSZUSTANDS AN EINEM KEILRIPPENRIEMEN**
V-RIBBED BELT AND METHOD FOR SHOWING A WEAR STATE OF A V-RIBBED BELT
COURROIE TRAPEZOIDALE A NERVURES ET PROCEDE POUR INDIQUER UN ETAT D'USURE SUR UNE COURROIE TRAPEZOIDALE A NERVURES

(30) Priorität: 13.03.2014 DE 102014003564
(43) Veröffentlichungstag der Anmeldung: 18.01.2017
(73) Patentinhaber: Arntz Beteiligungs GmbH & Co. KG, 37671 Höxter (DE)
(72) Erfinder: HAZIM, Salem, 37671 Höxter (DE); OLLENBORGER, Willi, 37639 Bevern (DE)
(74) Vertreter: Lins, Martina
(86) Internationale Anmeldenummer: PCT/DE2015/000074
(87) Internationale Veröffentlichungsnummer: WO 2015/135516

(56) Entgegenhaltungen:
- EP-A2- 2 469 123
- DE-A1- 3 009 468

## Beschreibung

Die Erfindung betrifft ein Verfahren zur Anzeige eines Verschleißzustands an einem Keilrippenriemen, der aufgebaut ist aus einem Riemenrücken, einem unter dem Riemenrücken angeordneten Zugstrang und einem Unterbau, in dem in Längsrichtung des Keilrippenriemens zueinander parallele und jeweils einen Zwischenraum zueinander aufweisende Keilrippen mit schrägen Rippenflanken ausgebildet sind, wobei sich die zum Eingriff von Scheibenrippen einer Keilrippenscheibe ausgebildeten Zwischenräume zwischen zeit Keilrippen des Keilrippenriemens bis zu einem Rippengrund der Keilrippen erstrecken.

Die Erfindung betrifft ferner einen Keilrippenriemen, aufgebaut mit einem Riemenrücken, einem unter dem Riemenrücken angeordneten Zugstrang und einem Unterbau, in dem in Längsrichtung des Keilrippenriemens zueinander parallele und jeweils einen Zwischenraum zueinander aufweisende Keilrippen mit schrägen Rippenflanken ausgebildet sind, wobei sich die zum Eingriff von Scheibenrippen einer Keilrippenscheibe ausgebildeten Zwischenräume zwischen zwei Keilrippen des Keilrippenriemens bis zum Rippengrund der Keilrippen erstrecken.

Keilrippenriemen sind zur Übertragung einer Antriebskraft auf eine Keilrippenscheibe ausgebildet. Der Keilrippenriemen weist in Längsrichtung verlaufende Keilrippen auf, deren Form durch schräge Rippenflanken bestimmt ist. Rippenflanken zweier nebeneinander angeordneter Keilrippen bilden einen keilförmigen Zwischenraum, in den die Scheibenrippen einer Keilrippenscheibe im montierten Zustand hineinragen. Der Antrieb der Keilrippenscheibe erfolgt über einen Reibschluss, der ausschließlich über die Rippenflanken erfolgt, die an den entsprechenden Flanken der Scheibenrippen anliegen. Die Keilrippen des Keilrippenriemens sind dabei gegenüber den zwischen den Scheibenrippen ausgebildeten Scheibenrillen etwas überdimensioniert, um eine seitliche Anlage der Keilrippen des Keilrippenriemens an den Scheibenrippen der Keilrippenscheibe unter einer Vorspannung zu realisieren, wodurch die Kraftübertragung über die Reibung sichergestellt wird.

Die Keilrippenriemen, auf die sich die vorliegende Erfindung bezieht, können in unterschiedlichen Ausführungsformen ausgebildet sein. So sind Keilrippenriemen bekannt, die einen glatten Riemenrücken aufweisen. Der Zugstrang, der aus in Längsrichtung des Keilrippenriemens verlaufenden, verseilten Strängen aus Textil, zugfesten Kunststofffäden oder auch Stahlfäden gebildet sein kann, kann sehr dehnungsarm bis elastisch ausgebildet sein, um unterschiedlichen Anwendungsfällen gerecht zu werden. Der Unterbau, in dem die Keilrippen ausgebildet sind, muss aus einem elastischen Material bestehen, das sehr widerstandsfähig gegen das Einpressen der Keilrippen in die Rillen der Keilrippenscheibe ist.

Auch wenn der Unterbau der Keilrippenriemen aus einem sehr widerstandsfähigen Material besteht, tritt selbstverständlich im Dauergebrauch des Keilrippenriemens ein Abrieb im Bereich der Rippenflanken auf, durch den die Breite der Keilrippen des Keilrippenriemens verringert wird. Eine fortschreitende Verringerung der Breite der Keilrippen führt zu einer Verminderung des Andrucks der seitlichen Rippenflanken an den entsprechenden Flanken der Scheibenrippen, sodass die angestrebte möglichst schlupffreie Kraftübertragung nicht mehr gewährleistet ist.

DE 30 09 468 A1 (Pirelli) offenbart einen Zahnriemen mit Textilabdeckung auf der Zahnseite und einer andersfarbigen Elastomerlage zwischen zwei verkautschukten Schnurstofflagen der Abdeckung. Die Abnutzungserscheinungen bei Zahnriemen, die auf einer Kette laufen, sind jedoch mit denen an Keil- und Keilrippenriemen, die über Rippenflanken in Kontakt mit Riemenscheiben stehen, nicht vergleichbar.

EP 2 469 123 A2 (Arntz) beschreibt u.a. die Möglichkeit, Schichten oder Zonen eines Keilrippenriemens aus rußfrei verstärktem Ethylen-alpha-Olefinelastomer anders als schwarz einzufärben. Dabei kann eine dünne Deckschicht auf den Rippen vorgesehen sein, die vom Kern abweichend und optisch unterscheidbar pigmentiert ist, sodass Verschleiß oder Beschädigungen leicht erkennbar sind.

Die Überprüfung des Zustands des Keilrippenriemens nach einer bestimmten Betriebsdauer erfolgt in bekannter Weise durch für jeden Keilrippenriementyp hergestellte Keilrippenlehren, die etwa der Ausbildung der Scheibenrippen der Keilrippenscheibe entsprechen, sodass über das Gefühl beim Einführen der Lehre in die Zwischenräume zwischen den Keilrippen des Keilrippenriemens erkennbar ist, ob über die Rippenflanken des Keilrippenriemens noch ein ausreichender seitlicher Andruck auf die Scheibenrippen der Keilrippenscheibe ausgeübt wird. Diese Methode ist notwendigerweise subjektiv und erfordert eine erhebliche Erfahrung der die Brauchbarkeit der benutzten Keilrippenriemen beurteilenden Person. Selbstverständlich ist auf diese Weise nur eine ungefähre qualitative Beurteilung möglich, sodass aus Sicherheitsgründen Keilrippenriemen häufig ausgetauscht werden, lange bevor dies tatsächlich erforderlich ist. Darüber hinaus ist es in vielen Fällen problematisch, die Qualität des Keilrippenriemens mit einer entsprechenden Keilrippenlehre im montierten Zustand des Keilrippenriemens zu testen. In vielen Fällen steht der hierfür benötigte Raum im eingebauten Zustand nicht zur Verfügung, sodass der entsprechende Test unterbleibt oder einen aufwändigen Ausbau des Keilrippenriemens erfordert.

Der vorliegenden Erfindung liegt daher die Aufgabe zugrunde, den Verschieißzustand des Keilrippenriemens auch in eingebautem Zustand überprüfen zu können.

Dies gelingt bei einem Verfahren der eingangs genannten Art erfindungsgemäß dadurch, dass ein Materialabtrag im Rippengrund als Kriterium für den Verschleißzustand detektiert wird.

Erfindungsgemäß wird daher nicht ein Materialabtrag (Verschleiß) an den Rippenflanken detektiert, sondern als Kriterium für einen den Austausch erfordernden Verschleißzustand angesehen, dass ein Materialabtrag am Rippengrund erfolgt. Hierfür ist die Tatsache maßgebend, dass die keilförmige Ausbildung der Keilrippen eine Kompensation eines Materialabtrags an den Rippenflanken dadurch ermöglicht, dass die keilförmigen Scheibenrippen der Keilrippenscheibe etwas tiefer in die - ebenfalls keilförmigen - Zwischenräume zwischen den Keilrippen des Keilrippenriemens eintauchen. Dieses verstärkte Eintauchen wird üblicherweise durch eine regelmäßige Überprüfung der Riemenspannung im montierten Zustand und einem dementsprechenden Nachspannen des Keilrippenriemens bewerkstelligt. Alternativ wird der Keilrippenriemen so eingebaut, dass mit einer elastisch aufgehängten Spannrolle eine bestimmte Riemenspannung während der Betriebsdauer sichergestellt wird. Ferner ist es bekannt, Keilrippenriemen mit elastischen Zugsträngen auszubilden, sodass die Montage des Keilrippenriemens unter einer Längenvorspannung erfolgen kann, die den möglichen Materialabtrag während der Laufdauer des Keilrippenriemens kompensieren kann.

Der vorliegenden Erfindung liegt die Erkenntnis zugrunde, dass eine nicht mehr zu kompensierende Unbrauchbarkeit des Keilrippenriemens vorliegt, wenn die Spitzen der Scheibenrippen der Keilrippenscheiben sich am Nutgrund der Zwischenräume des Keilrippenriemens abstützen. In diesem Fall ist eine radiale Verstellung des Keilrippenriemens relativ zu der von dem Keilrippenriemen umschlungenen Keilrippenscheibe nicht mehr oder nur noch in ganz geringer Weise möglich, sodass der Andruck der schrägen Rippenflanken der Keilrippen an den entsprechenden Flanken der Scheibenrippen nicht mehr mit der nötigen Vorspannung erfolgen kann. Wenn somit die Spitzen der Scheibenrippen eine gewisse Zeit auf dem jeweiligen Nutgrund des Keilrippenriemens laufen, entsteht dort ein Materialabtrag. Dieser wird erfindungsgemäß detektiert, um einen die Auswechslung des Keilrippenriemens indizierenden Verschleißzustand zu detektieren.

Das erfindungsgemäße Verfahren zur Anzeige eines Verschleißzustands an einem Keilrippenriemen, der aufgebaut ist mit einem Riemenrücken, einem unter dem Riemenrücken angeordneten Zugstrang und einem Unterbau, in dem in Längsrichtung des Keilrippenriemens zueinander parallel verlaufende und jeweils einen Zwischenraum zueinander aufweisende Keilrippen mit schrägen Rippenflanken ausgebildet sind, wobei sich die zum Eingriff von Scheibenrippen einer Riemenscheibe ausgebildeten Zwischenräume zwischen zwei Keilrippen des Keilrippenriemens bis zu einem Rippengrund der Keilrippen erstrecken, zeichnet sich dadurch aus, dass bei einem Materialabtrag am Unterbau das erste Material im Rippengrund freigelegt wird, während die Oberfläche der Rippenflanken weiterhin durch das zweite Material gebildet ist und dass der Materialabtrag im Rippengrund als Kriterium für den Verschleißzustand detektiert wird.

In einer sehr einfachen Weise gelingt die Detektion optisch, indem die Oberfläche im Rippengrund durch ein Material gebildet und darunter ein optisch differierendes Material angeordnet wird und die optisch erkennbare Freilegung des optisch differierenden Materials als Kriterium für den Verschleißzustand benutzt wird. In besonders sinnfälliger Weise ist das optisch differierende Material farblich anders gestaltet als das erste Material.

Das Aufliegen der Spitze der Scheibenrippen auf dem Rippengrund führt regelmäßig noch nicht sofort zu einer Beeinträchtigung der Kraftübertragung durch den Riemen, weil sich die Spitze der Keilrippen in das regelmäßig elastische Material des Unterbaus des Keilrippenriemens noch leicht eindrücken kann, bevor der Widerstand gegen das weitere Eindrücken so groß wird, dass die Nachspannung des Keilrippenriemens nicht mehr in dem Maße erfolgen kann, dass der vorgesehene Anpressdruck an den Rippenflanken bestehen bleibt.

Daraus wird ersichtlich, dass es von der Größe der Rippen und von den Rippenprofilen abhängt, welcher Kontakt der Scheibenrippenspitze am Rippengrund noch toleriert werden kann. Dementsprechend können die Dicken des zweiten Materials im Bereich des Rippengrunds zwischen einer minimalen Dicke, die bei etwa 0,1 mm liegt, und einer Dicke von 2 mm liegen. Für manche Keilrippenriemenarten ist es zweckmäßig, das optische Warnsignal bereits bei einem geringfügigen Kontakt der Scheibenrippenspitze am Rippengrund des Keilrippenriemens anzuzeigen. In diesem Fall ist die das erste Material abdeckende Schicht des zweiten Materials am Rippengrund minimal und muss nur so stark sein, dass die optisch differierende erste Schicht am Rippengrund nicht erkennbar ist. Hierzu muss ersichtlich die zweite Schicht nicht vollständig die erste Schicht abdecken, da bereits eine überwiegende Abdeckung zu einer Unterdrückung der Erkennbarkeit der ersten Schicht führen kann.

Ein zur Durchführung des erfindungsgemäßen Verfahrens geeigneter Keilrippenriemen der eingangs erwähnten Art ist erfindungsgemäß dadurch gekennzeichnet, dass der Unterbau aus wenigstens einem ersten Material und einem zweiten Material besteht, dass die Oberflächen der Rippenflanken der Keilrippen durch das zweite Material gebildet sind, dass im Bereich des Rippengrundes das erste Material mit einer dünnen Schicht des zweiten Materials abgedeckt ist, sodass bei einem Materialabtrag am Unterbau das erste Material im Rippengrund freigelegt wird, während die Oberfläche der Rippenflanken weiterhin durch das zweite Material gebildet ist und dass sich das erste Material optisch deutlich von dem zweiten Material unterscheidet.

In einer bevorzugten Ausführungsform unterscheiden sich die beiden Materialien farblich, wobei das zweite Material schwarz oder grau sein kann, während das von dem zweiten Material abgedeckte erste Material vorzugsweise eine satte, gut erkennbare Farbe aufweist. Die Farbe kann dabei zur besseren Erkennbarkeit als Leuchtfarbe ausgebildet sein. Eine dann am Rippengrund erkennbare, beispielsweise rote Farbe zeigt den Verschleißzustand an, der ein sofortiges oder zumindest baldiges Auswechseln des Keilrippenriemens empfehlenswert erscheinen lässt.

Das erste Material schließt sich an den Zugstrang, der in einem geeigneten Material eingebettet sein kann, an und bildet somit zunächst eine im Wesentlichen ebene Schicht aus. Diese kann sich bis zu der zweiten Schicht im Bereich des Rippengrundes erstrecken, sodass die Grenzschicht zwischen dem ersten Material und dem zweiten Material über die Breite des Riemens und nicht in die Rippen hinein erstreckt. Alternativ ist es möglich, dass sich das erste Material auch in den Bereich der Rippen erstreckt und somit einen Rippenkern ausbildet, der von dem zweiten Material abgedeckt ist. Die Dicke der abdeckenden Lage des zweiten Materials ist im Bereich der Rippenflanken dabei wesentlich größer als im Bereich des Rippengrundes.

Konkret kann die Dicke des zweiten Materials im Bereich des Rippengrundes, also oberhalb des ersten Materials zwischen 0,1 und 2 mm liegen. Die Dicke der Schicht des ersten Materials oberhalb des Rippengrundes - also die Dicke des ersten Materials zwischen der zu den Rippen zeigenden Grenzebene des Zugstrangs und einer Grenzlinie zum zweiten Material - liegt für bevorzugte Ausführungsbeispiele zwischen 0,1 und 2,5 mm.

Der erfindungsgemäße Keilrippenriemen kann in allen bekannten Ausführungsformen ausgebildet sein, also insbesondere auch als unelastischer oder elastischer Keilrippenriemen. Darüber hinaus kann der Riemenrücken auch mit einer weiteren Rippe oder mit einer Zahnung mit in Laufrichtung hintereinander angeordneten Zähen versehen sein, um wechselseitige Umschlingung einer Keilrippenscheibe und einer Zahnscheibe zu ermöglichen, wies dies grundsätzlich bekannt ist.

Die Herstellung des erfindungsgemäßen Keilrippenriemens erfolgt in bekannter Weise. Bei der Verwendung von Naturkautschuk oder synthetischem Kautschuk als Material kann die Vulkanisation mit der Formgebung (Formverfahren) oder vor der Formgebung erfolgen, wenn die Form anschließend durch ein Schleifverfahren hergestellt wird. Der erfindungsgemäße Keilrippenriemen ist auch in seiner endgültigen Form extrudierbar. Als Material des Keilrippenriemens kommen über die üblichen Elastomere hinaus auch Kunststoffe in Frage, wie beispielsweise Polyurethan.

Die Erfindung soll im Folgenden anhand von Ausführungsbeispielen näher erläutert werden, die als mögliche Ausführungsformen beschrieben werden und keine schutzlimitierende Funktion haben sollen. In der Zeichnung zeigt:
- Figur 1: einen Schnitt durch einen erfindungsgemäßen Keilrippenriemen in einer ersten Ausführungsform im neuen Zustand und
- Figur 2: einen Schnitt gemäß Figur 2 für den Keilrippenriemen im verschlissenen Zustand.

In dem dargestellten Ausführungsbeispiel weist der Keilrippenriemen einen glatten Riemenrücken 1 auf, der eine nach außen zeigende glatte Oberfläche bildet. An die andere Fläche des Riemenrückens 1 schließt sich ein Zugstrang 2 an, der aus nebeneinander angeordneten Zugseilen gebildet ist. Der Zugstrang 2 kann in üblicher Weise in ein geeignetes, vorzugsweise klebendes Kunststoffmaterial eingebettet sein. An den Zugstrang schließt sich vom Riemenrücken 1 abgewandt eine Schicht aus einem ersten Material 3 eines Unterbaus 4 des Keilrippenriemens an. Die Schicht des ersten Materials 3 wird auf einen Rohwickel mit einer konstanten Dicke aufgebracht, sodass an sich eine gerade Grenzlinie 5 zu einem zweiten Material 6 gebildet wird. Das erste Material 3 und zweite Material 6 können auch als doubliertes Material mit den gewünschten Dickenverhältnissen auf dem Rohwickel (Riemenrücken 1 und Zugstrang 2) aufgebracht werden. In dem dargestellten Ausführungsbeispiel ist die Formung des Unterbaus im Formverfahren erfolgt, wodurch sich die Grenzlinie 5 etwas wellig verformt. Aus dem zweiten Material 6 werden bei der Formung Keilrippen 7 mit den zwischen ihnen liegenden Zwischenräumen 8 ausgebildet. Die Zwischenräume 8 erstrecken sich bis zu einem Rippengrund 9. Der Rippengrund 9 befindet sich in dem dargestellten Ausführungsbeispiel vollständig innerhalb des zweiten Materials 6, das im Bereich des Rippengrunds 9 das erste Material 3 durch eine dünne Schicht mit einer eingezeichneten Dicke a2 abdeckt.

In einem bevorzugten Ausführungsbeispiel besteht das erste Material 3 aus einem farbigen, insbesondere roten, EPDM (Ethylen-Propylen-DienKautschuk), während das zweite Material aus einem üblichen schwarzen EPDM-Kautschuk gebildet sein kann.

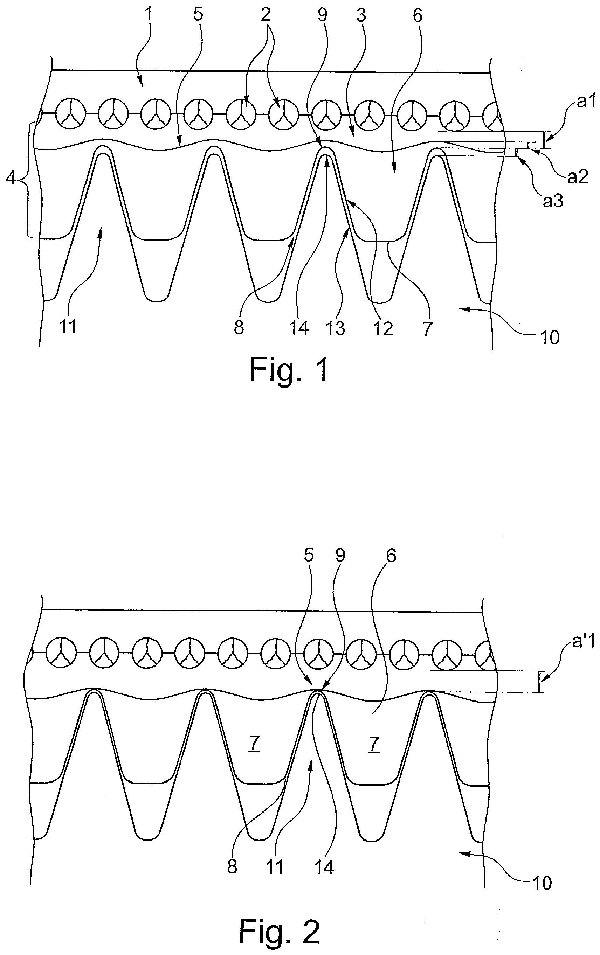

Die Zeichnung verdeutlicht, dass im Gebrauch der Keilrippenriemen mit einer entsprechenden Keilrippenscheibe 10 zusammenwirkt. Die Keilrippenscheibe 10 weist Scheibenrippen 11 auf, die in die Zwischenräume 8 zwischen zwei Keilrippen 7 so hineinragen, dass eine seitliche Rippenflanke 12 der Keilrippe 7 mit einer Seitenflanke 13 der benachbarten Scheibenrippe 11 flächig unter einer seitlichen Vorspannung zur Anlage kommt. Die beiden Seitenflanken 13 einer Scheibenrippe 11 liegen so an den Rippenflanken 12 der beiden benachbarten Keilrippen 7 an, dass eine Spitze 14 der Scheibenrippe 11 mit Abstand von dem Rippengrund 9 endet. Der im Neuzustand des Keilrippenriemens bestehende Abstand zwischen der Spitze 14 und dem Rippengrund 9 ist in Figur 1 als Maß a3 eingezeichnet.

Das ebenfalls eingezeichnete Maß a1 verdeutlicht die Stärke des ersten Materials 3 zwischen dem Zugstrang 2 und der Grenzlinie 5 im Bereich des jeweiligen Rippengrundes 9.

Die den Neuzustand des Keilrippenriemens verdeutlichende Figur 1 lässt erkennen, dass von dem Keilrippenriemen in einer Draufsicht von der Seite der Keilrippen 7 her nur das zweite Material, das beispielsweise schwarz eingefärbt ist, erkennbar ist.

Figur 2 verdeutlicht einen Verschleißzustand, der an dem erfindungsgemäßen Keilrippenriemen erkennbar ist. Durch Materialabtrag an den Rippenflanken 12 und ein automatisches oder manuelles Nachspannen des Keilrippenriemens um die Keilrippenscheibe 10 greifen nunmehr die Scheibenrippen 11 tiefer in den Zwischenraum 8 zwischen zwei Keilrippen 7 hinein. In dem in Figur 2 dargestellten verschlissenen Zustand trifft die Spitze 14 der Scheibenrippen 11 auf den Rippengrund 9 und hat von diesem Material abgetragen. Der Materialabtrag ist soweit gediehen, dass im Bereich des Rippengrunds 9 nunmehr kein zweites Material 6 mehr vorhanden ist, sodass im Bereich des Rippengrunds 9 erstes Material 5, das beispielsweise rot eingefärbt ist, freigelegt ist. In einer Draufsicht auf den Keilrippenriemen in einem Bereich, der die Umschlingung der Keilrippenscheibe 10 verlassen hat, ist nun im Bereich der Keilrippen 7 weiterhin das schwarze Material erkennbar, während im Rippengrund 9 das erste Material, beispielweise in roter Farbe, sichtbar wird. Der Keilrippenriemen weist in dieser Ansicht somit eine schwarze Oberfläche mit dünnen roten Streifen jeweils im Rippengrund 9 auf. Diese Ansicht ist ein Signal dafür, dass der Keilrippenriemen einen Verschleißzustand erreicht hat, in dem er sofort oder bald ausgewechselt werden sollte, weil die Rippenflanken 12 der Keilrippen 7 nicht mit den nötigen Andruck und ggf. der nötigen Anlagefläche an den Seitenflanken 13 der Scheibenrippen 11 zum Zwecke der Kraftübertragung anliegen.

Es ist erkennbar, dass es für die Funktion des erfindungsgemäßen Keilrippenriemens keine Rolle spielt, ob sich das erste Material 3 in die Keilrippen 7 hinein erstreckt oder, wie in der Zeichnung beispielhaft dargestellt ist, die Keilrippen 7 vollständig aus dem zweiten Material gebildet sind. Für die Erkennbarkeit des Materialabtrags im Rippengrund 9 ist es lediglich vorteilhaft, wenn die Rippenflanken 12 weiterhin aus dem zweiten Material 6 gebildet sind, also beispielsweise schwarz erscheinen, während das Verschleißsignal als beispielsweise roter Streifen am Rippengrund 9 erscheint.

Demgemäß sind große Variationen in den Anteilen des ersten Materials 3 und des zweiten Materials 6 im Unterbau 4 des Keilrippenriemens möglich. Bei einer Verformung im Formverfahren kann das erste Material 3 5-95 % und demgemäß das zweite Material 6 95-5 % des Materials des Unterbaus 4 ausmachen. Bei einer Herstellung im Schleifverfahren ist es zweckmäßig, wenn der Anteil des ersten Materials 3 5-50 % und der Anteil des zweiten Materials 6 50-95 % des Materials des Unterbaus 4 betragen.

Obwohl in dem beschriebenen Ausführungsbeispiel auf eine Farberkennung am Rippengrund abgestellt worden ist, wird das erfindungsgemäße Verfahren hierauf nicht beschränkt. Das Prinzip des erfindungsgemäßen Verfahrens beruht darauf, einen Materialabtrag am Rippengrund 9 - und nicht an den Rippenflanken 12 - als Signal für einen Verschleißzustand zu verwenden. Der Materialabtrag am Rippengrund 9 kann selbstverständlich auch mit üblichen Materialprüfungsgeräten festgestellt werden, insbesondere wenn weiterhin zwei unterschiedliche Materialien 3 und 6 verwendet werden und am Rippengrund 9 nur eine dünne Schicht des zweiten Materials 6 verwendet wird. Wenn sich die beiden Materialien, beispielsweise für Ultraschall- oder Röntgenwellen unterschiedlich verhalten, lässt sich auf diese Weise der Materialabtrag des zweiten Materials 6 leicht detektieren.

Der Materialabtrag am Rippengrund 9 kann ferner auch durch eine Abstandsmessung, beispielsweise in einer Radartechnik, mit einem einfachen Radarsensor festgestellt werden, wobei dieser Sensor fest in einer Anlage montiert sein kann. In diesem Fall kann der Abstand des Rippengrunds 9 von dem fest installierten Sensor überwacht werden. Vergrößert sich der Abstand aufgrund des Materialabtrags um ein gewisses Maß, kann dieses Signal als Indikator für einen Verschleißzustand genutzt werden.

Die eine optische, insbesondere farbliche Markierung des Keilrippenriemens im Nutgrund hervorrufende beschriebene Ausführungsform weist allerdings den Vorteil auf, dass keine Überwachungssensorik erforderlich ist, da der Verschleißzustand optisch erkennbar ist.

## Patentansprüche

1. Verfahren zur Anzeige eines Verschleißzustands an einem Keilrippenriemen aufgebaut mit einem Riemenrücken (1), einem unter dem Riemenrücken angeordneten Zugstrang (2) und einem Unterbau (4), in dem in Längsrichtung des Keilrippenriemens zueinander parallel verlaufende und jeweils einen Zwischenraum (8) zueinander aufweisende Keilrippen (7) mit schrägen Rippenflanken (12) ausgebildet sind, wobei sich die zum Eingriff von Scheibenrippen (11) einer Keilriemenscheibe (10) ausgebildeten Zwischenräume (8) zwischen zwei Keilrippen (7) des Keilrippenriemens bis zu einem Rippengrund (9) der Keilrippen (7) erstrecken, **dadurch gekennzeichnet, dass** bei einem Materialabtrag am Unterbau (4) das erste Material (3) im Rippengrund (9) freigelegt wird, während die Oberfläche der Rippenflanken (12) weiterhin durch das zweite Material (6) gebildet ist und dass der Materialabtrag im Rippengrund (9) als Kriterium für den Verschleißzustand detektiert wird.

2. Verfahren nach Anspruch 1, **dadurch gekennzeichnet, dass** die Detektion optisch erfolgt, indem die Oberfläche im Rippengrund (9) durch ein zweites Material (6) gebildet und darunter ein erstes, optisch differierendes Material (3) angeordnet wird und die optisch erkennbare Freilegung des ersten Materials (3) als das Kriterium für den Verschleißzustand benutzt wird.

3. Keilrippenriemen, bestehend aus einem Riemenrücken (1), einem unter dem Riemenrücken (1) angeordneten Zugstrang (2), und einem Unterbau (4), in dem in Längsrichtung des Keilrippenriemens zueinander parallel verlaufende und jeweils einen Zwischenraum (8) zueinander aufweisende Keilrippen (7) mit schrägen Rippenflanken (12) ausgebildet sind, wobei sich die zum Eingriff von Scheibenrippen (11) einer Keilriemenscheibe (10) ausgebildeten Zwischenräume (8) zwischen zwei Keilrippen (7) des Keilrippenriemens bis zu einem Rippengrund (9) der Keilrippen (7) erstrecken, **dadurch gekennzeichnet, dass** der Unterbau (4) aus wenigstens einem ersten Material (3) und einem zweiten Material (6) besteht, dass die Oberflächen der Rippenflanken (12) der Keilrippen (7) durch das zweite Material (6) gebildet sind, wobei die Dicke der abdeckenden Lage des zweiten Materials (6) im Bereich der Rippenflanken (12) wesentlich größer als im Bereich des Rippengrunds (9) ist, und dass im Bereich des Rippengrunds (9) das erste Material (3) mit einer dünnen Schicht des zweiten Materials (6) abgedeckt ist, sodass bei einem Materialabtrag am Unterbau (4) das erste Material (3) im Rippengrund (9) freigelegt wird, während die Oberfläche der Rippenflanken (12) weiterhin durch das zweite Material (6) gebildet ist und dass sich das erste Material (3) optisch deutlich von dem zweiten Material (6) unterscheidet.

4. Keilrippenriemen nach Anspruch 3, **dadurch gekennzeichnet, dass** das erste Material (3) eine andere Farbe als das zweite Material (6) aufweist.

5. Keilrippenriemen nach Anspruch 4, **dadurch gekennzeichnet, dass** das zweite Material (6) schwarz ist.

6. Keilrippenriemen nach einem der Ansprüche 3 bis 5, **dadurch gekennzeichnet, dass** das erste Material (3) eine sich an den Zugstrang (2) anschließende Schicht des Unterbaus (4) bildet, die sich nicht in die Keilrippen (7) hinein erstreckt.

7. Keilrippenriemen nach einem der Ansprüche 3 bis 5, **dadurch gekennzeichnet, dass** das erste Material (3) eine sich an den Zugstrang (2) anschließende Schicht des Unterbaus (4) bildet, die sich in die Keilrippen (7) hinein erstreckt und an den Rippenflanken (12) von einer dicken Lage des zweiten Materials (6) abgedeckt ist.

8. Keilrippenriemen nach einem der Ansprüche 3 bis 7, **dadurch gekennzeichnet, dass** die Dicke des zweiten Materials (6) im Bereich des Rippengrunds (9) zwischen 0,1 und 2 mm liegt.

9. Keilrippenriemen nach einem der Ansprüche 3 bis 8, **dadurch gekennzeichnet, dass** die Dicke der Schicht des ersten Materials (3) zwischen einer Grenzebene des Zugstrangs (2) und einer Grenzlinie (5) zum zweiten Material (6) 0,1 bis 2,5 mm beträgt.

## Claims

1. A method for showing a wear state on a V-ribbed belt constructed with a belt backing (1), a tension strand (2) which is disposed below the belt backing, and an underside (4) in which are configured V-ribs (7), having oblique rib flanks (12), which in the longitudinal direction of the V-ribbed belt run mutually parallel and which each have a mutual intermediate space (8), wherein the intermediate spaces (8) which are configured for the engagement of pulley ribs (11) of a V-rib pulley (10) between two V-ribs (7) of the V-ribbed belt extend up to a rib base (9) of the V-ribs (7), **characterized in that** in the case of a removal of material on the underside (4) the first material (3) in the rib base (9) is exposed while the surface of the rib flanks (12) is furthermore formed by the second material (6), a removal of material in the rib base (9) is detected as a criterion for the wear state.

2. The method as claimed in claim 1, **characterized in that** detection is performed visually **in that** the surface in the rib base (9) is formed by a second material (6), and a first visually different material (3) is disposed therebelow, and the visually identifiable exposure of the first material (3) is utilized as the criterion for the wear state.

3. A V-ribbed belt composed of a belt backing (1), of a tension strand (2) which is disposed below the belt backing (1), and of an underside (4) in which are configured V-ribs (7), having oblique rib flanks (12), which in the longitudinal direction of the V-ribbed belt run mutually parallel and which each have a mutual intermediate space (8), wherein the intermediate spaces (8) which are configured for the engagement of pulley ribs (11) of a V-belt pulley (10) between two V-ribs (7) of the V-ribbed belt extend up to a rib base (9) of the V-ribs (7), **characterized in that** the underside (4) is composed of at least one first material (3) and of one second material (6), **in that** the surfaces of the rib flanks (12) of the V-ribs (7) are formed by the second material (6), the thickness of the covering layer of the second material being substantially larger in the region of the rib flanks than in the region of the rib base, **in that** the first material (3) in the region of the rib base (9) is covered with a thin layer of the second material (6) such that in the case of a removal of material on the underside (4) the first material (3) in the rib base (9) is exposed while the surface of the rib flanks (12) is furthermore formed by the second material (6), and **in that** the first material (3) visually differs significantly from the second material (6).

4. The V-ribbed belt as claimed in claim 3, **characterized in that** the first material (3) has a color that is different from that of the second material (6).

5. The V-ribbed belt as claimed in claim 4, **characterized in that** the second material (6) is black.

6. The V-ribbed belt as claimed in one of claims 3 to 5, **characterized in that** the first material (3) forms a layer of the underside (4) that adjoins the tension strand (2), which layer does not extend into the V-ribs (7).

7. The V-ribbed belt as claimed in one of claims 3 to 5, **characterized in that** the first material (3) forms a layer of the underside (4) that adjoins the tension strand (2), which layer extends into the V-ribs (7) and on the rib flanks (12) is covered by a thick layer of the second material (6) .

8. The V-ribbed belt as claimed in one of claims 3 to 7, **characterized in that** the thickness of the second material (6) in the region of the rib base (9) is between 0.1 and 2 mm.

9. The V-ribbed belt as claimed in one of claims 3 to 8, **characterized in that** the thickness of the layer of the first material (3) between a boundary plane of the tension strand (2) and a boundary line (5) toward the second material (6) is 0.1 to 2.5 mm.

## Revendications

1. Procédé d'affichage d'un état d'usure sur une courroie à nervures trapézoïdales constituée par un dos de courroie (1), par un brin de traction (2) agencé au-dessous du dos de courroie et par une sous-structure (4), dans laquelle des nervures trapézoïdales (7) s'étendant parallèlement les unes aux autres en direction longitudinale de la courroie à nervures trapézoïdales et présentant un intervalle (8) les unes des autres sont réalisées avec des flancs de nervure obliques (12), les intervalles (8) réalisés pour l'engagement de nervures (11) d'une poulie de courroie (10) s'étendant entre deux nervures trapézoïdales (7) de la courroie à nervures trapézoïdales jusqu'à un fond de nervure (9) des nervures trapézoïdales (7),
**caractérisé en ce que**
lors d'une abrasion de matière sur la sous-structure (4), le premier matériau (3) au fond de nervure (9) est mis à découvert tandis que la surface des flancs de nervure (12) continue d'être formée par le second matériau (6), et **en ce que**
l'abrasion de matière au fond de nervure (9) est détectée comme critère de l'état d'usure.

2. Procédé selon la revendication 1,
**caractérisé en ce que**
la détection se fait par voie optique du fait que la surface au fond de nervure (9) est formée par un second matériau (6) et un premier matériau (3) différent sur le plan optique (3) est agencé au-dessous, et la mise à découvert perceptible par voie optique du premier matériau (3) est utilisée comme critère pour l'état d'usure.

3. Courroie à nervures trapézoïdales constituée par un dos de courroie (1), par un brin de traction (2) agencé au-dessous du dos de courroie (1) et par une sous-structure (4), dans laquelle des nervures trapézoïdales (7) s'étendant parallèlement les unes aux autres en direction longitudinale de la courroie à nervures trapézoïdales et présentant un intervalle (8) les unes des autres sont réalisées avec des flancs de nervure obliques (12), les intervalles (8) réalisés pour l'engagement de nervures (11) d'une poulie de courroie (10) s'étendant entre deux nervures trapézoïdales (7) de la courroie à nervures trapézoïdales jusqu'à un fond de nervure (9) des nervures trapézoïdales (7),
**caractérisée en ce que**
la sous-structure (4) est constituée d'au moins un premier matériau (3) et d'un second matériau (6), **en ce que**
les surfaces des flancs (12) des nervures trapézoïdales (7) sont formées par le second matériau (6), l'épaisseur de la couche de couverture du second matériau (6) dans la zone des flancs de nervure (12) est sensiblement plus élevée que celle dans la zone du fond de nervure (9), et
dans la zone du fond de nervure (9), le premier matériau (3) est recouvert par une couche mince du second matériau (6), de sorte que lors d'une abrasion de matière sur la sous-structure (4), le premier matériau (3) au fond de nervure (9) est mis à découvert tandis que la surface des flancs de nervure (12) continue d'être formée par le second matériau (6), et **en ce que**
le premier matériau (3) diffère nettement du second matériau (6), sur le plan optique.

4. Courroie à nervures trapézoïdales selon la revendication 3,
**caractérisée en ce que**
le premier matériau (3) présente une autre couleur que le second matériau (6).

5. Courroie à nervures trapézoïdales selon la revendication 4,
**caractérisée en ce que**
le second matériau (6) est noir.

6. Courroie à nervures trapézoïdales selon l'une des revendications 3 à 5,
**caractérisée en ce que**
le premier matériau (3) constitue une couche de la sous-structure (4) qui se raccorde au brin de traction (2) et qui ne s'étend pas jusque dans les nervures trapézoïdales (7).

7. Courroie à nervures trapézoïdales selon l'une des revendications 3 à 5,
**caractérisée en ce que**
le premier matériau (3) constitue une couche de la sous-structure (4) qui se raccorde au brin de traction (2) et qui s'étend jusque dans les nervures trapézoïdales (7) et est recouverte par une couche épaisse du second matériau (6) au niveau des flancs de nervure (12).

8. Courroie à nervures trapézoïdales selon l'une des revendications 3 à 7,
**caractérisée en ce que**
l'épaisseur du second matériau (6) dans la zone du fond de nervure (9) est comprise entre 0,1 et 2 mm.

9. Courroie à nervures trapézoïdales selon l'une des revendications 3 à 8,
**caractérisée en ce que**
l'épaisseur de la couche du premier matériau (3) entre un plan limite du brin de traction (2) et une ligne limite (5) vers le second matériau (6) est comprise entre 0,1 et 2,5 mm.
